# FASCICULE DE BREVET EUROPEEN

(11) **EP 2 632 798 B1**
(45) Date de publication et mention de la délivrance du brevet: **31.05.2017**
(21) Numéro de dépôt: 11779779.5
(22) Date de dépôt: 03.10.2011
(51) Int. Cl.: B64D 33/08, B64D 33/00

(54) **NACELLE DE TURBORÉACTEUR À SECTION DE SORTIE DE VENTILATION ADAPTABLE**
TL-TRIEBWERKSGONDEL MIT VARIABLEM LÜFTUNGSAUSTRITTSQUERSCHNITT
TURBOJET ENGINE NACELLE WITH VARIABLE VENTILATION OUTLET CROSS SECTION

(30) Priorité: 25.10.2010 FR 1058712
(43) Date de publication de la demande: 04.09.2013
(73) Titulaire: Safran Nacelles, 76700 Gonfreville-l'Orcher (FR)
(72) Inventeur: VAUCHEL, Guy Bernard, 76700 Harfleur (FR); LEMAINS, Laurence, 76700 St Laurent De Brevedent (FR)
(74) Mandataire: Gaillarde, Frédéric F. Ch.
(86) Numéro de dépôt international: PCT/FR2011/052297
(87) Numéro de publication internationale: WO 2012/056138

(56) Documents cités:
- FR-A1- 2 890 696
- FR-A1- 2 896 276
- FR-A1- 2 920 146
- GB-A- 2 435 076
- US-A- 5 704 207

## Description

L'invention se rapporte à une nacelle de moteur à réaction pour un aéronef.

Un aéronef est mû par plusieurs turboréacteurs logés chacun dans une nacelle abritant également un ensemble de dispositifs d'actionnement annexes liés à son fonctionnement et assurant diverses fonctions, lorsque le turboréacteur est en fonctionnement ou à l'arrêt. Ces dispositifs d'actionnement annexes peuvent comprendre notamment un système mécanique d'actionnement d'inverseurs de poussée.

Une nacelle présente généralement une structure tubulaire comprenant une entrée d'air en avant du turboréacteur, une section médiane destinée à entourer une soufflante du turboréacteur, une section arrière abritant des moyens d'inversion de poussée et destinée à entourer la chambre de combustion du turboréacteur, et est généralement terminée par une tuyère d'éjection dont la sortie est située en aval du turboréacteur (tuyère dite primaire).

Les nacelles modernes sont souvent destinées à abriter un turboréacteur double flux apte à générer par l'intermédiaire des pâles de la soufflante en rotation un flux d'air chaud (également appelé flux primaire) issu de la chambre de combustion du turboréacteur.

Une nacelle comprend généralement une structure externe, dite Outer Fixed Structure (OFS), qui définit, avec une structure interne concentrique de la section arrière, dite Inner Fixed Structure (IFS), entourant la structure du turboréacteur proprement dite en arrière de la soufflante, un canal annulaire d'écoulement, encore appelé veine secondaire, visant à canaliser un flux d'air froid, dit secondaire, qui circule à l'extérieur du turboréacteur.

La structure interne délimite autour du turboréacteur un compartiment et des zones de ventilations dont l'objet principal est de renouveler l'air qui circule entre l'IFS et le moteur.

La structure interne et la tuyère d'éjection délimitent une section de sortie de la ventilation du compartiment moteur.

Plusieurs sources d'air frais (prélevé du flux secondaire) alimentent le compartiment de ventilation, circulent le long du turboréacteur où elles s'échauffent avant d'être évacuées par la sortie de ventilation.

De manière générale, les sections d'entrée et de sortie de ventilation sont dimensionnées de manière à assurer une ventilation et une pression acceptable dans le compartiment de ventilation le long du turboréacteur.

Le document WO 2009/024660 décrit un tel système de régulation de l'air de ventilation et de la pression dans le compartiment de ventilation. Le système décrit permet également d'accommoder certaines déformations du turboréacteur en vol.

Plus précisément, le document WO 2009/024660 décrit une nacelle pour turboréacteur, comprenant une section arrière présentant une structure interne destinée à entourer une partie arrière d'un compartiment moteur et à délimiter, avec une tuyère d'éjection, une section de sortie calibrée de la ventilation du compartiment moteur, à l'aide de moyens d'écartement disposés dans la section de sortie, caractérisée en ce que les moyens d'écartement se décomposent en des moyens d'écartement rigides conçus pour assurer un écartement constant, et en des moyens de compensation conçus de façon à pouvoir s'adapter aux mouvements relatifs du turboréacteur par rapport à la nacelle.

Il convient toutefois de noter que le turboréacteur est équipé de vannes de décharge d'air haute pression lui permettant de réguler ses performances. Généralement, ces vannes de décharge se situent à l'intérieur de la structure interne (IFS) et débouchent à l'intérieur du compartiment de ventilation.

Ainsi, dans le cas où une ou plusieurs vannes se déchargent dans ce compartiment de ventilation pour certains cas de vol, il s'ensuit une forte surpression qui doit être absorbée et régulée.

Un autre cas de surpression accidentelle peut également être la rupture de canalisation (incident « burst duct ») du turboréacteur.

De plus, ces surpressions entraînent des chargements irréguliers de la structure interne qui travaillent en fatigue. Il peut également en résulter des déformations de ladite structure interne et par voie de conséquence, une perturbation de l'écoulement du flux d'air à l'extérieur de la nacelle se traduisant par des pertes d'efficacité aérodynamique.

Il est apparu que les solutions actuelles ne prennent pas en compte ces vannes de décharge et il existe donc un besoin pour une solution permettant de mieux tenir compte de ces contraintes supplémentaires.

Plus précisément, les solutions actuelles ne permettent pas une gestion active de la sortie de ventilation.

Le document FR 2 920 146 A1 décrit un système de gestion passive de la sortie de ventilation, dont des moyens d'écartement sont aptes à se déplacer sous l'action d'un surcroît de pression se produisant dans le compartiment moteur. La présente invention vise à pallier les problèmes précédemment évoqués et à fournir un système permettant une adaptation de la sortie de ventilation au maximum de cas de vol et de pression possibles.

Pour ce faire, la présente invention se rapporte à une nacelle pour turboréacteur selon la revendication 1, comprenant au moins un élément mobile associé à au moins un moyen de contrôle correspondant, ledit élément mobile étant mobile entre une position de retrait dans laquelle la section de sortie de ventilation est maximale, et une position d'engagement dans laquelle l'élément mobile vient réduire au moins partiellement la section de sortie de ventilation par rapport à la position de retrait, ledit moyen de contrôle étant apte à déplacer l'élément mobile entre les positions de retrait et d'engagement.

Ainsi, en prévoyant un élément mobile dont la position est commandable, la section de sortie de ventilation peut être réglée précisément et être aisément adaptée à tous les cas de vol et d'incidents susceptibles de provoquer une variation de pression dans le compartiment de ventilation du turboréacteur.

Avantageusement, l'élément mobile est déplaçable dans au moins une position intermédiaire entre ses positions de retrait et d'engagement. Il s'agit d'un déplacement discret de l'élément mobile.

Avantageusement encore, l'élément mobile est déplaçable de manière continue entre ses positions de retrait et d'engagement.

De manière préférentielle, l'élément mobile est monté mobile en translation. Selon une première variante de réalisation, l'élément mobile est mobile en translation le long d'un axe sensiblement longitudinal de la nacelle.

Selon une deuxième variante de réalisation, l'élément mobile est mobile en translation selon une direction sensiblement radiale de la nacelle.

Alternativement, l'élément mobile est monté mobile en rotation autour d'un axe de pivotement. Il pourra notamment s'agir d'un clapet.

Selon un premier mode de réalisation préféré, l'élément mobile est monté mobile sur une virole d'échappement au niveau de la tuyère d'éjection.

Selon un deuxième mode de réalisation préféré, l'élément mobile est monté mobile sur une paroi de la structure interne.

Selon un troisième mode de réalisation préféré, l'élément mobile est monté mobile entre la structure interne et la tuyère d'éjection.

Avantageusement, l'élément mobile est réalisé en plusieurs secteurs et s'étend sur au moins une partie de la périphérie de la sortie de ventilation.

Alternativement, l'élément mobile est réalisé en un seul secteur au moins partiellement périphérique.

De manière avantageuse, le moyen de contrôle de l'élement mobile comprend au moins un moyen d'entraînement électrique.

Alternativement, le moyen de contrôle de l'élément mobile comprend au moins un moyen d'entraînement pneumatique ou hydraulique.

Il conviendra de noter que, compte tenu des conditions de températures et de pression au voisinage du turboréacteur, la présence de moyens d'actionnement et de commande est rendue difficile.

De manière avantageuse, le moyen de contrôle de l'élément mobile comprend au moins un moyen de pilotage sensible à la pression de ventilation. Ainsi, il est possible de mettre en oeuvre une régulation au moins partiellement automatique de la pression dans le compartiment de ventilation.

Préférentiellement, l'élément mobile est monté à l'encontre d'un moyen de retour élastique vers sa position de retrait (section de sortie maximum) ou d'engagement (section de sortie minimale).

La mise en oeuvre de l'invention sera mieux comprise à l'aide de la description détaillée qui est exposée ci-dessous en regard au dessin annexé dans lequel :
- la figure 1 est une vue schématique en coupe longitudinale d'une nacelle selon l'invention à l'état de fermeture ;
- la figure 2 est une vue schématique partielle agrandie d'une section arrière de la nacelle de la figure 1 ;
- la figure 3 est une vue schématique partielle en perspective depuis l'arrière de la nacelle de la figure 1 ;
- la figure 4 est une vue schématique partielle en coupe longitudinale d'un élément mobile équipant une sortie de ventilation de la nacelle de la figure 1 selon l'invention.
- les figures 6 à 13 sont des vues schématiques partielles en coupe longitudinale de variantes de réalisation de l'élément mobile équipant une sortie de ventilation d'une nacelle selon l'invention.

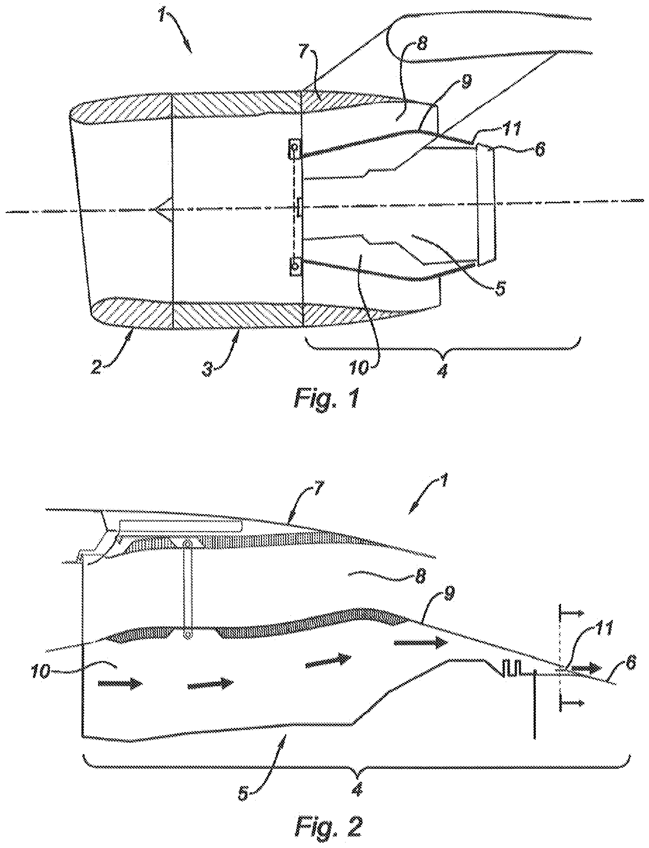

Une nacelle 1 d'un aéronef selon l'invention, telle que schématiquement représentée à la figure 1, comprend de manière connue en soi, une section avant 2 d'entrée d'air, une section médiane 3 destinée à entourer la soufflante (non visible), et une section arrière 4 destinée à entourer un compartiment moteur 5 et terminé par une tuyère d'éjection 6 dont la sortie est située en arrière du turboréacteur.

Cette nacelle 1 comprend une structure externe 7, dite OFS (Outer Fixed Structure, Structure Externe Fixe), qui définit un canal annulaire 8 d'écoulement avec une structure interne 9 concentrique, dite IFS (Internal Fixed Structure, Structure Interne Fixe), entourant une partie aval 5 du turboréacteur en arrière de la soufflante.

A titre d'illustration, on notera que la structure externe de la section aval 4 représentée est équipée d'un dispositif d'inversion de poussée. Bien évidemment, il pourra également s'agir d'une nacelle non équipée de dispositif d'inversion de poussée dite lisse.

La structure interne 9 définit autour du turboréacteur 5 un compartiment de ventilation 10, permettant la circulation d'un flux d'air de refroidissement (Flèches) autour du turboréacteur par prélèvement d'air dans la veine 8

L'air prélevé est évacué du compartiment de ventilation 10 par une sortie de ventilation 11, délimitée par un écartement entre la structure interne 9 et la tuyère d'éjection 6 et maintenue par des moyens d'écartement (non visibles).

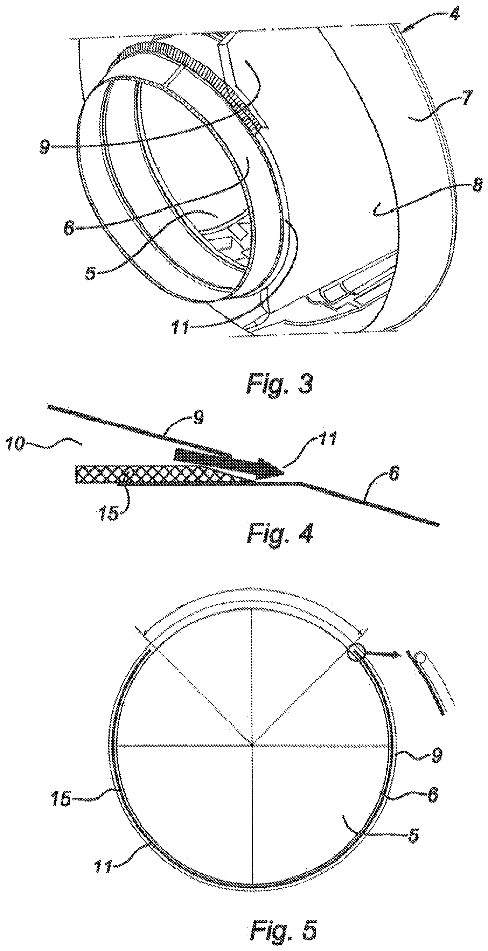

Conformément à l'invention et comme un premier mode de réalisation est représenté aux figures 4 et 5, la nacelle 1 comprend au moins un élément mobile 15, associé à au moins un moyen de contrôle (non visible) correspondant, ledit élément mobile 15 étant mobile entre une position de retrait dans laquelle la section de sortie de ventilation 11 est maximale et une position d'engagement dans laquelle l'élément mobile 15 vient réduire au moins partiellement la section de sortie de ventilation 11 par rapport à la position de retrait, ledit moyen de contrôle étant apte à déplacer l'élément mobile 15 entre les positions de retrait et d'engagement.

La section de sortie 11 peut donc être contrôlée activement et dynamiquement pour réguler la pression d'air dans le compartiment de ventilation 10 et s'adapter à des cas de surpression ou de baisse de pression.

L'élément mobile pourra être conçu pour adopter une ou plusieurs positions discrètes entre sa position de retrait et sa position d'engagement, ou encore être déplacé de manière continue le long d'un trajet de déplacement.

Comme visible sur la figure 5, il convient de noter qu'en règle générale, la section de sortie 11 ne s'étend pas sur toute la périphérie de la tuyère 6 et de la structure interne 9, une portion supérieure étant rendue étanche pour des raisons de conditionnement au feu.

L'élément mobile 15 pourra être réalisé d'une seule pièce ou en plusieurs secteurs, éventuellement indépendants.

La forme de l'élément mobile 15 pourra prendre la forme souhaitée et pourra être adapté en fonction des contraintes d'écoulement notamment. Notamment, il pourra être intégré à l'enveloppe de la structure 6, 9 sur laquelle il est monté.

Ainsi, on pourra prévoir, par exemple, un élément mobile 15, 155, 158, 159 en biseau, un élément mobile 151, 152 de section sensiblement rectangulaire, un élément mobile 153 arrondi, un volet pivotant 154, 156, etc ...

Selon un premier mode de réalisation, tel que représenté aux figures 4, 6 à 9, l'élément mobile 15, 151, 152, 153, 154 est monté mobile sur une virole d'échappement au niveau de la tuyère d'éjection 6.

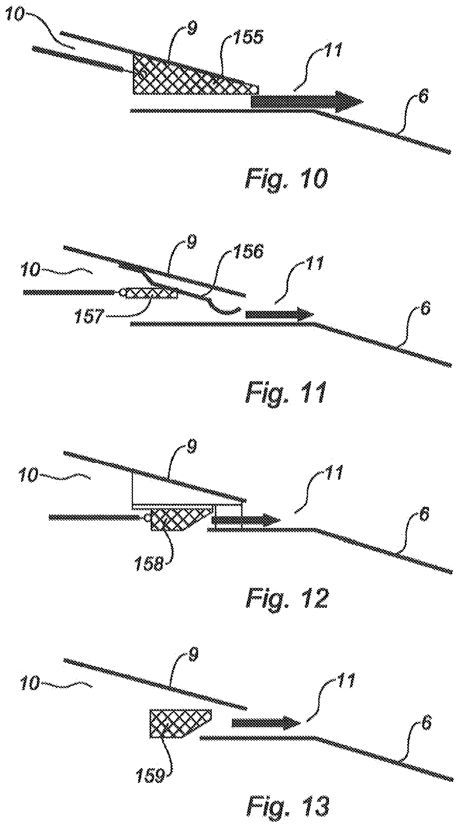

Selon un deuxième mode de réalisation, tel que représenté aux figures 10 à 12, l'élément mobile 155, 156, 158 est monté mobile sur la structure interne 9.

Selon un troisième mode de réalisation, tel que représenté à la figure 13, l'élément mobile 159 est monté mobile de manière indépendante entre la structure interne 9 et une virole de la tuyère d'échappement 6.

Le mouvement de l'élément mobile peut également être de différente nature.

Selon une première variante de réalisation (figures 4, 6, 7, 10, 12 et 13), l'élément mobile 15, 151, 152, 155, 158, 158 est monté mobile en translation.

Le guidage de l'élément mobile peut s'effectuer par l'intermédiaire d'un système rail/glissière, tel que visible sur la figure 5 (portion agrandie).

L'élément mobile pourra être mobile selon un axe sensiblement longitudinal de la nacelle mais également selon un axe radial de la nacelle ou une combinaison des deux.

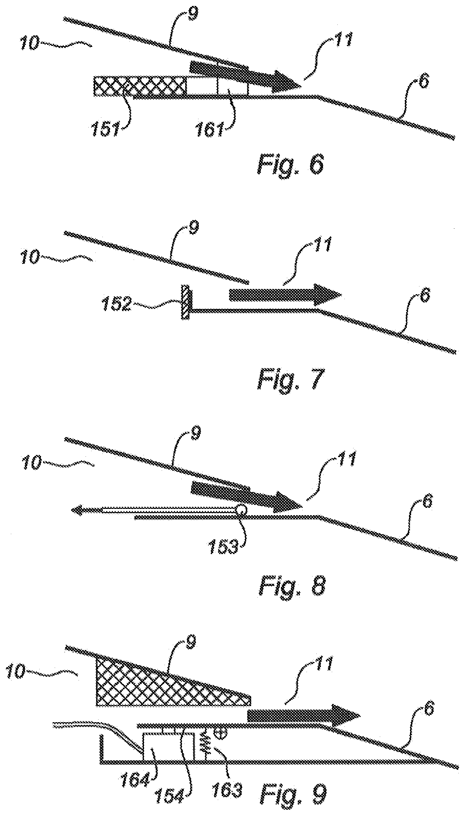

Selon une deuxième variante de réalisation (figures 9, 11), l'élément mobile 154, 156 est monté mobile en rotation autour d'un axe de pivotement à la manière d'un clapet.

Bien évidemment, ces modes de réalisation ne sont pas limitatifs et les moyens équivalents connus de l'homme du métier sont également utilisables.

L'entraînement de l'élément mobile 15 pourra être effectué par tout moyen d'actionnement connu, adapté aux conditions de température et de pression environnantes.

On pourra notamment prévoir des moyens d'entraînement électrique, ou pneumatique ou hydraulique.

Avantageusement, les moyens d'entraînement et/ou de commande seront déportés de l'élément mobile, notamment en zone dite froide, c'est-à-dire vers l'amont du turboréacteur 5 et du compartiment de ventilation 10. Dans un tel cas, on pourra prévoir un entraînement par câble de traction ou par renvoi rigide comme un système cardan.

A titre de caractéristiques complémentaires pouvant être généralisées aux autres modes de réalisation décrits, les figures 6 et 12 montrent la mise en place de butées locales 161 positionnées en interface entre la structure interne 9 et la virole de tuyère 6. Ces butées visent à permettre de garantir un écartement minimal entre ladite structure interne 9 et la tuyère 6 en cas de déformation relative des deux structures 6, 9.

Les figures 8 et 9 montrent des modes de réalisation utilisant un moyen de pilotage sensible à la pression dans le compartiment de ventilation 10.

Plus précisément, la figure 8 prévoit en tant qu'élément mobile 153, un élément gonflable, à la manière d'une baudruche, qui en gonflant obstrue plus ou moins la sortie de ventilation 11. Un tel type de système est particulièrement utile avec un moyen de contrôle de type pneumatique ou hydraulique. Le système pneumatique ou hydraulique pourra être associé au moteur ou dédié et autonome. Par ailleurs, cet élément gonflable 153 peut être élastique et tendre à retourner automatiquement vers une position par défaut, correspondant à une section de sortie 11 minimale ou maximale, en cas de relâchement de sa pression d'alimentation.

Le mode de réalisation de la figure 9 montre un élément mobile 154, réalisé sous la forme d'un volet pivotant, monté à l'encontre d'un ressort de rappel 163 tendant à le ramener vers une position de retrait dans laquelle la section de sortie 11 est maximale. Ce volet est actionné par un poussoir rétractable 164 mécanique. Ce poussoir peut être électrique, hydraulique ou pneumatique. L'actionnement du volet peut se faire en amont ou en aval de son axe d'articulation. De plus, un poussoir peut entraîner plusieurs volets.

De la même manière, la figure 11 montre un volet 156 élastique (ressort lame, par exemple) forcé par un poussoir 157. La lame ressort pourra présenter une extrémité formée de pluieurs lamelles réalisée, par exemple, par des saignées dans la lame.

Sur la figure 12, l'élément mobile 158 est guidé sur la structure interne 9 selon un déplacement rectiligne dans l'axe de la nacelle. Une telle configuration permet de concevoir une structure monobloc de l'élément mobile 158.

Sur la figure 13, l'élément mobile 159 est guidé soit sur la structure interne IFS 9 ou sur la structure de la tuyère d'éjection. L'élément mobile 159, dans sa translation, réduit la section de passage simultanément entre les deux structures.

Par ailleurs, dans le cas d'une structure de nacelle dite en D-Duct, c'est-à-dire dont la structure externe OFS comprend deux demi-capots sensiblement hémicylindriques et articulés en zone supérieure au niveau d'un mât d'accrochage, l'élément mobile 158 peut être réalisé en continu depuis un secteur couvrant la zone supérieure sans ventilation à la zone inférieure de la structure interne 9.

Dans le cas d'une structure de section aval 4 dite en O-duct, c'est-à-dire, formée d'un seul capotage coulissant sensiblement cylindrique, l'élément mobile 158 pourra être formé d'un secteur reliant les deux zones supérieures sans ventilation.

Bien que l'invention ait été décrite en liaison avec des exemples particuliers de réalisation, il est bien évident qu'elle n'y est nullement limitée et qu'elle comprend tous les équivalents techniques des moyens décrits, ainsi que leurs combinaisons si celles-ci entrent dans le cadre de l'invention telle que définie par les revendications.

## Revendications

1. Nacelle (1) pour turboréacteur comprenant une section arrière (4) présentant une structure interne (9) destinée à entourer une partie arrière (5) d'un compartiment moteur et à délimiter, avec une tuyère d'éjection (6), une section de sortie (11) de la ventilation (10) du compartiment moteur, la nacelle comprenant au moins un élément mobile (15, 151, 152, 153, 154, 155, 156, 158, 159), ledit élément mobile étant mobile entre une position de retrait dans laquelle la section de sortie de ventilation est maximale, et une position d'engagement dans laquelle l'élément mobile vient réduire au moins partiellement la section de sortie de ventilation par rapport à la position de retrait, **caractérisée en ce que** la nacelle comprend au moins un moyen de contrôle auquel l'élément mobile est associé, ledit moyen de contrôle étant apte à déplacer l'élément mobile entre les positions de retrait et d'engagement.

2. Nacelle (1) selon la revendication 1, **caractérisée en ce que** l'élément mobile (15, 151, 152, 153, 154, 155, 156, 158, 159) est déplaçable dans au moins une position intermédiaire entre ses positions de retrait et d'engagement.

3. Nacelle (1) selon la revendication 2, **caractérisée en ce que** l'élément mobile (15, 151, 152, 153, 154, 155, 156, 158, 159) est déplaçable de manière continue entre ses positions de retrait et d'engagement.

4. Nacelle (1) selon l'une quelconque des revendications 1 à 3, **caractérisée en ce que** l'élément mobile (15, 151, 152, 155, 158, 159) est monté mobile en translation.

5. Nacelle (1) selon la revendication 4, **caractérisé en ce que** l'élément mobile (15, 151, 155, 158, 159) est mobile en translation le long d'un axe sensiblement longitudinal de la nacelle.

6. Nacelle (1) selon l'une quelconque des revendications 4 ou 5, **caractérisé en ce que** l'élément mobile (152, 155) est mobile en translation selon une direction sensiblement radiale de la nacelle.

7. Nacelle (1) selon l'une quelconque des revendications 1 à 3, **caractérisée en ce que** l'élément mobile (154, 156) est monté mobile en rotation autour d'un axe de pivotement.

8. Nacelle (1) selon l'une quelconque des revendications 1 à 7, **caractérisée en ce que** l'élément mobile (15, 151, 152, 153, 154)est monté mobile sur une virole d'échappement au niveau de la tuyère d'éjection.

9. Nacelle (1) selon l'une quelconque des revendications 1 à 7, **caractérisée en ce que** l'élément mobile (155, 156, 158) est monté mobile sur une paroi de la structure interne.

10. Nacelle (1) selon l'une quelconque des revendications 1 à 7, **caractérisée en ce que** l'élément mobile (159) est monté mobile entre la structure interne et la tuyère d'éjection.

11. Nacelle (1) selon l'une quelconque des revendications 1 à 10, caracétrisée en ce que l'élément mobile (151, 152, 153, 154, 155, 156, 158, 159) est réalisé en plusieurs secteurs et s'étend sur au moins une partie de la périphérie de la sortie de ventilation.

12. Nacelle (1) selon l'une quelconque des revendications 1 à 10, **caractérisée en ce que** l'élément mobile (15) est réalisé en un seul secteur au moins partiellement périphérique.

13. Nacelle (1) selon l'une quelconque des revendications 1 à 12, **caractérisée en ce que** le moyen de contrôle de l'élément mobile comprend au moins un moyen d'entraînement électrique.

14. Nacelle (1) selon l'une quelconque des revendications 1 à 12, **caractérisée en ce que** le moyen de contrôle de l'élément mobile (154, 153) comprend au moins un moyen d'entraînement pneumatique ou hydraulique.

15. Nacelle (1) selon l'une quelconque des revendications 1 à 14, **caractérisée en ce que** le moyen de contrôle de l'élément mobile (154, 153) comprend au moins un moyen de pilotage sensible à la pression de ventilation.

16. Nacelle (1) selon l'une quelconque des revendications 1 à 15, **caractérisée en ce que** l'élément mobile (153, 154, 156) est monté à l'encontre d'un moyen de retour élastique vers sa position de retrait (sortie max.) ou d'engagement (sortie min).

## Patentansprüche

1. Gondel (1) für ein Turbostrahltriebwerk, eine hintere Sektion (4) umfassend, die eine interne Struktur (9) aufweist, die dazu bestimmt ist, einen hinteren Abschnitt (5) eines Triebwerksraumes zu umgeben, und mit einer Strahldüse (6) eine Ausgangssektion (11) der Lüftung (10) des Triebwerksraumes einzugrenzen, wobei die Gondel zumindest ein mobiles Element (15, 151, 152, 153, 154, 155, 156, 158, 159) umfasst, wobei das besagte mobile Element zwischen einer zurückgezogenen Position, in welcher die Lüftungsausgangssektion maximal ist, und einer Eingriffsposition bewegt werden kann, in der das mobile Element die Lüftungsausgangssektion im Verhältnis zur zurückgezogenen Position zumindest teilweise verringert, **dadurch gekennzeichnet, dass** die Gondel zumindest ein Steuerungsmittel umfasst, dem das mobile Element zugeordnet ist, wobei das besagte Steuerungsmittel imstande ist, das mobile Element zwischen der zurückgezogenen Position und der Eingriffsposition zu bewegen.

2. Gondel (1) nach Anspruch 1, **dadurch gekennzeichnet, dass** das mobile Element (15, 151, 152, 153, 154, 155, 156, 158, 159) in zumindest eine Zwischenposition zwischen der zurückgezogenen Position und der Eingriffsposition bewegt werden kann.

3. Gondel (1) nach Anspruch 2, **dadurch gekennzeichnet, dass** das mobile Element (15, 151, 152, 153, 154, 155, 156, 158, 159) stufenlos zwischen seiner zurückgezogenen Position und seiner Eingriffsposition bewegt werden kann.

4. Gondel (1) nach einem der Ansprüche 1 bis 3, **dadurch gekennzeichnet, dass** das mobile Element (15, 151, 152, 155, 158, 159) verschiebbar montiert ist.

5. Gondel (1) nach Anspruch 4, **dadurch gekennzeichnet, dass** das mobile Element (15, 151, 155, 158, 159) entlang einer im Wesentlichen längslaufenden Achse der Gondel verschiebbar ist.

6. Gondel (1) nach einem der Ansprüche 4 oder 5, **dadurch gekennzeichnet, dass** das mobile Element (152, 155) in eine im Wesentlichen radiale Richtung der Gondel verschiebbar ist.

7. Gondel (1) nach einem der Ansprüche 1 bis 3, **dadurch gekennzeichnet, dass** das mobile Element (154, 156) um eine Schwenkachse drehbar montiert ist.

8. Gondel (1) nach einem der Ansprüche 1 bis 7, **dadurch gekennzeichnet, dass** das mobile Element (15, 151, 152, 153, 154) mobil auf einem Auslassring im Bereich der Strahldüse montiert ist.

9. Gondel (1) nach einem der Ansprüche 1 bis 7, **dadurch gekennzeichnet, dass** das mobile Element (155, 156, 158) mobil auf einer Wand der internen Struktur montiert ist.

10. Gondel (1) nach einem der Ansprüche 1 bis 7, **dadurch gekennzeichnet, dass** das mobile Element (159) mobil zwischen der internen Struktur und der Strahldüse montiert ist.

11. Gondel (1) nach einem der Ansprüche 1 bis 10, **dadurch gekennzeichnet, dass** das mobile Element (151, 152, 153, 154, 155, 156, 158, 159) aus mehreren Sektoren besteht, und sich über zumindest einen Teil der Peripherie des Lüftungsausgangs erstreckt.

12. Gondel (1) nach einem der Ansprüche 1 bis 10, **dadurch gekennzeichnet, dass** das mobile Element (15) aus einem einzigen zumindest teilweise peripheren Sektor besteht.

13. Gondel (1) nach einem der Ansprüche 1 bis 12, **dadurch gekennzeichnet, dass** das Steuerungsmittel des mobilen Elements zumindest ein elektrisches Antriebsmittel umfasst.

14. Gondel (1) nach einem der Ansprüche 1 bis 12, **dadurch gekennzeichnet, dass** das Steuerungsmittel des mobilen Elements (154, 153) zumindest ein pneumatisches oder hydraulisches Antriebsmittel umfasst.

15. Gondel (1) nach einem der Ansprüche 1 bis 14, **dadurch gekennzeichnet, dass** das Steuerungsmittel des mobilen Elements (154, 153) zumindest ein Lenkungsmittel umfasst, welches auf den Lüftungsdruck reagiert.

16. Gondel (1) nach einem der Ansprüche 1 bis 15, **dadurch gekennzeichnet, dass** das mobile Element (153, 154, 156) gegen ein elastisches Rückholmittel in Richtung seiner zurückgezogenen Position (max. ausgefahren) oder Eingriffsposition (min. ausgefahren) montiert ist.

## Claims

1. A nacelle (1) for a turbojet engine comprising a rear section (4) having an inner structure (9) intended to surround a rear portion (5) of a motor compartment and to delimit, with an ejection nozzle (6), an outlet section (11) of the ventilation (10) of the motor compartment, the nacelle comprising at least one movable member (15, 151, 152, 153, 154, 155, 156, 158, 159), said movable member being movable between a retracted position in which the ventilation outlet section is maximum, and an engagement position in which the movable member reduces at least partially the ventilation outlet section relative to the retracted position, **characterized in that** the nacelle comprises at least one control means to which the mobile member is associated, said control means being capable of displacing the movable member between the retracted and engagement positions.

2. The nacelle (1) according to claim 1, **characterized in that** the movable member (15, 151, 152, 153, 154, 155, 156, 158, 159) is displaceable in at least one intermediate position between the retracted and engagement positions thereof.

3. The nacelle (1) according to claim 2, **characterized in that** the movable member (15, 151, 152, 153, 154, 155, 156, 158, 159) is continuously displaceable between the retracted and engagement positions thereof.

4. The nacelle (1) according to any one of claims 1 to 3, **characterized in that** the movable member (15, 151, 152, 155, 158, 159) is movably mounted in translation.

5. The nacelle (1) according to claim 4, **characterized in that** the movable member (15, 151, 155, 158, 159) is movable in translation along a substantially longitudinal axis of the nacelle.

6. The nacelle (1) according to any one of claims 4 or 5, **characterized in that** the movable member (152, 155) is movable in translation in a substantially radial direction of the nacelle.

7. The nacelle (1) according to any one of claims 1 to 3, **characterized in that** the movable member (154, 156) is movably mounted in rotation about a pivoting axis.

8. The nacelle (1) according to any one of claims 1 to 7, **characterized in that** the movable member (15, 151, 152, 153, 154) is movably mounted on an exhaust shroud at the ejection nozzle.

9. The nacelle (1) according to any one of claims 1 to 7, **characterized in that** the movable member (155, 156, 158) is movably mounted on a wall of the inner structure.

10. The nacelle (1) according to any one of claims 1 to 7, **characterized in that** the movable member (159) is movably mounted between the inner structure and the ejection nozzle.

11. The nacelle (1) according to any one of claims 1 to 10, **characterized in that** the movable member (151, 152, 153, 154, 155, 156, 158, 159) is made in several sectors and extends over at least one portion of the periphery of the ventilation outlet.

12. The nacelle (1) according to any one of claims 1 to 10, **characterized in that** the movable member (15) is made in a single sector at least partially peripheral.

13. The nacelle (1) according to any one of claims 1 to 12, **characterized in that** the control means of the movable member comprises at least one electric drive means.

14. The nacelle (1) according to any one of claims 1 to 12, **characterized in that** the control means of the movable member (154, 153) comprises at least one pneumatic or hydraulic drive means.

15. The nacelle (1) according to any one of claims 1 to 14, **characterized in that** the control means of the movable member (154, 153) comprises at least one driving means sensitive to the ventilation pressure.

16. The nacelle (1) according to any one of claims 1 to 15, **characterized in that** the movable member (153, 154, 156) is mounted against an elastic return means towards the retracted (max. output) or engagement (min. output) position thereof.
